# EUROPEAN PATENT APPLICATION

(11) **EP 1 555 808 A1**
(43) Date of publication of application: **20.07.2005**
(21) Application number: 04290149.6
(22) Date of filing: 19.01.2004
(51) Int. Cl.: H04N 5/00, H04N 5/775, H04N 5/76

(54) **Multimedia telecommunication system with a multipurpose multimedia device**

(71) Applicant: ALCATEL, 75008 Paris (FR)
(72) Inventor: Moons, Jan Lode Mia, 2220 Heist-Op-Den-Berg (BE); Coppens, Toon, 2500 Lier (BE); Trappeniers, Lieven Leopold Albertine, 2200 Herentals (Noorderwijk) (BE); Godon, Marc Bruno Frieda, 1840 Londerzeel (BE); Handekyn, Koen, 9000 Gent (BE); Baekeland, Rony Alfons Maria, 2000 Antwerpen (BE); Van Broeck, Sigurd, 2980 Zoersel (BE); Hendrikse, Arjen, 1000 Brussel (BE); Bouwen, Jan Alfons Albert, 2000 Antwerpen (BE)
(74) Representative: Narmon, Gisèle Marie Thérèse

(57) **Abstract**

A multimedia telecommunication system with a telecommunication service provider (TSP) to broadcast a multimedia composition signal (CS) from a multimedia content provider (MCP) to a user station (US). The multimedia signal comprises several multimedia signal components such as for instance audio signals (AU), video signals (VD), subtitles data (ST) and/or logo data (LG). The multimedia content provider (MCP) comprises a first signal composer (CP) for combining the multimedia signal components into the multimedia composition signal. The user station is provided with a multimedia recorder (VCR) and a user interface set (TV), generally a television set associated to a Set-Top-Box. The multimedia recorder (VCR) comprises a signal decomposer (DU) for receiving and decomposing the multimedia composition signal into its multimedia signal components, a storage device (REC) for storing at least some of the multimedia signal components received from the signal decomposer, and a second signal composer (CU) for combining at least some portions stored in the storage device into a replay signal (RS) transmitted to user interface set (TV).

## Description

The present invention relates to a multimedia telecommunication system comprising a multimedia content provider adapted to broadcast a multimedia composition signal to a user station via a telecommunication service provider, said user station being provided with a multimedia recorder and a user interface set.

Such a multimedia telecommunication system is generally known in the art. Therein, the multimedia recorder may be a Video Cassette Recorder, a Personal Video Recorder or a Digital Video Recorder, and the user interface set may be a television set.

Such a current multimedia recorder can only capture a regular Audio/Video (A/V) stream as multimedia composition signal sent thereto by the content provider via the telecommunication service provider, e.g. a cable company. Today, the content provider chooses which components, e.g. audio, video or language of the subtitles, the multimedia composition signal is composed of and nothing in the system can alter this composition signal when it is replayed on the user interface set. In other words, a the present time, it is not possible to record an "enhanced broadcast" stream that consists, besides the A/V stream, of graphics, text, user input interaction, meta-data, a choreography script, logic/interaction instantiation, etc.

An object of the present invention is to provide a multimedia telecommunication system of the above known type but wherein the user has the possibility to record and replay any "enhanced broadcast" stream of multimedia data.

According to the invention, this object is achieved due to the fact that said multimedia composition signal comprises a plurality of multimedia signal components, that said multimedia content provider comprises a first signal composer adapted to combined said multimedia signal components into said multimedia composition signal, and that said multimedia recorder comprises:
- a signal decomposer adapted to receive and to decompose the multimedia composition signal into said multimedia signal components,
- a storage device adapted to store at least a portion of the multimedia signal components received from said signal decomposer, and
- a second signal composer adapted to combine at least part of said portions stored in the storage device into a replay signal transmitted to said user interface set.

In this way, the multimedia composition signal sent to and received by the user station is no longer limited to an Audio/Video (A/V) stream, but may for instance consist of:
- artifacts, such as
   A/V Streams (the main show and/or additional clips),
   graphics (icons, menus,...),
   text (subtitles, extra information),
- user input interaction,
- meta-data (tags that divide the program into defined pieces),
- choreography script (what to do when users selects an item, ...),
- logic/interaction instantiation, ...
that the user may experience/view at replay time or at a later time.

In other words, owing to the signal composers and the signal decomposer, it is possible not only to record multimedia programs such as a TV show, but also multimedia signal components or applications, e.g. menus, dialogs, queries and other extra content, that enriches this TV show. The user can then experience the show with all the attached interactivity and additional content at a time it fits to this user.

Another characterizing embodiment of the present invention is that said portion of multimedia signal components comprises any combination of audio signals, video signals, subtitles data, logo data and/or other multimedia data broadcasted by said content provider.

Preferably, said user is able to control said second signal composer to combine predetermined portions of multimedia signal components stored in the storage device in order to compose said replay signal transmitted to the user interface set.

As the multimedia signal components are stored in the storage device, the user may control the second signal composer to re-use only some of them to compose his/her own broadcast/TV show.

Also another characterizing embodiment of the present invention is that said portion of multimedia signal components comprises a description file of the multimedia data broadcasted by said multimedia content provider.

This prevents the multimedia recorder to store all the multimedia signal components broadcasted by the content provider. The user may use the distribution list to only download selected multimedia signal components.

Still another characterizing embodiment of the present invention is that said multimedia recorder is a local recorder located at the premises of said user station.

In a preferred embodiment, the present invention is further characterized in that said local recorder is located in a set-top-box coupled to said user interface set.

Yet another characterizing embodiment of the present invention is that said multimedia recorder is a remote recorder located at a remote data server of said multimedia telecommunication system.

With the known recorders it is not possible to record on a node of the network, e.g. on a remote data server at the service provider. According to the invention, it is also possible to record on such a remote recorder rather than only on the local recorder.

The present invention is further also characterized in that said remote recorder is connected to a local recorder located at the premises of said user station.

This will give the user the ability to decide where to store the recording, locally on the local recorder or somewhere on a remote data server. There is also a fallback scenario possible that when the user has selected to record locally and something goes wrong, e.g. disk full, the remote node takes over the recording.

Hereafter are some examples of recording of enhanced broadcast, i.e. a multimedia composition signal decomposable in its multimedia signal components according to the invention.
- Recording a French-spoken movie with Spanish subtitles. At replay, the user may select the English-spoken language and the Chinese subtitles;
- Recording a documentary about dinosaurs. During the playback of this record an icon, that is part of the recording, appears on the screen at a certain time. When the user clicks on the icon, it shows an overlayed menu that gives the ability to provide the user with more information, e.g. text, audio, movie clips,... about the T-Rex that's on the screen at that moment;
- Recording an interactive game, that has an area to send and read messages about the show. During the playback of the recording, the user is able to go into that messages area, read messages viewers have sent and gives the ability to send messages back, even though the user is looking at a program recorded earlier;
- Recording an educational program. The user records the program and replays it at a time that suits best to him/her. During replay the user can watch the A/V stream which might be an instructor explaining something about chemistry. The user can go into the quiz part, e.g. with a click on a button on the local recorder, of the show where he/she could test his/her knowledge about the explained topic and test the new knowledge with some multiple-choice questions.

Further characterizing embodiments of the present multimedia telecommunication system are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a multimedia telecommunication system wherein a multimedia composition signal (CS) is broadcasted from a multimedia content provider (MCP) to a user station (US) as a composition of multimedia signal components according to the invention;
Fig. 2 represents a variant of the multimedia telecommunication system of Fig. 1 with a remote data server for recording the multimedia signal components; and
Figs. 3a to 3c show variants of the multimedia recorder (VCR) of the user station (US).

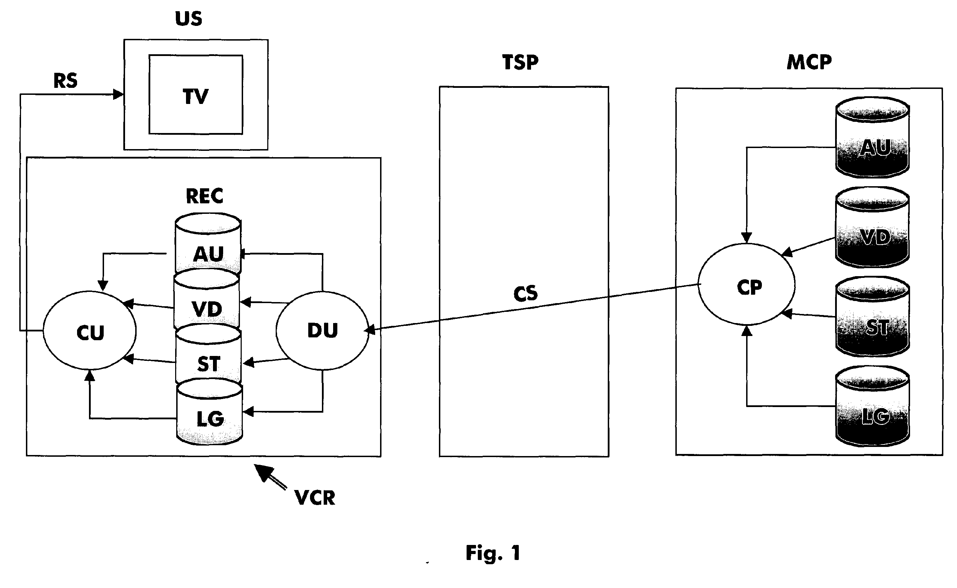

The multimedia telecommunication system shown at Fig. 1 comprises a multimedia content provider MCP for providing and broadcasting multimedia data to a user station US via a telecommunication service provider TSP. The multimedia content provider MCP provides the multimedia data under the form of multimedia signal components such as audio signals AU, video signals VD, subtitles data ST, logo data LG and other multimedia components. These signal components are combined (or composed) into a multimedia composition signal CS by means of a signal composer CP associated to the multimedia content provider MCP. The composition signal CS is then transmitted through the telecommunication service provider TSP to the user station US wherein the different signal components are decomposed. To this end, the user station US is provided with a multimedia recorder VCR that comprises a signal decomposer DU to receive and to decompose the multimedia composition signal into its multimedia signal components, a storage device REC to store at least some of the multimedia signal components received from the signal decomposer DU, and a signal composer CU to combine some or all the multimedia signal components stored in the storage device into a replay signal RS. The user station US is further provided with a user interface set TV to replay the multimedia data stored in the multimedia recorder VCR and received as replay signal RS from the signal composer CU.

It is to be noted that the multimedia recorder VCR is generally a local recorder located in a so-called Set-Top-Box (STB, not shown) of the user station US.

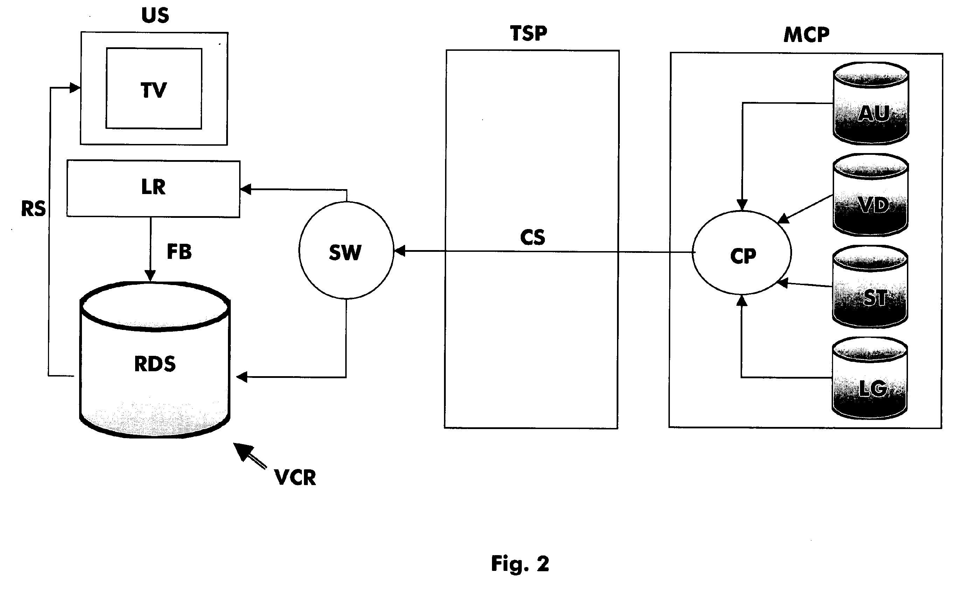

However, in a variant embodiment shown at Fig. 2, the multimedia recorder VCR is a remote recorder that may be located at a remote data server RDS of the multimedia telecommunication system. The remote recorder may for instance be connected to the local recorder LR located at the premises of the user station US. In that case, the user has the ability to decide where to store the multimedia signal components: locally on the local recorder or somewhere on a remote data server. This is controlled by a switch SW transferring the components of the multimedia composition signal CS either to the local recorder LR or to the remote recorder RDS. It is then also possible to have a fallback scenario whereby, if the user has selected to record on the local recorder LR and if something goes wrong, e.g. disk full, the remote recorder RDS takes over the recording from the local recorder via the connection FB.

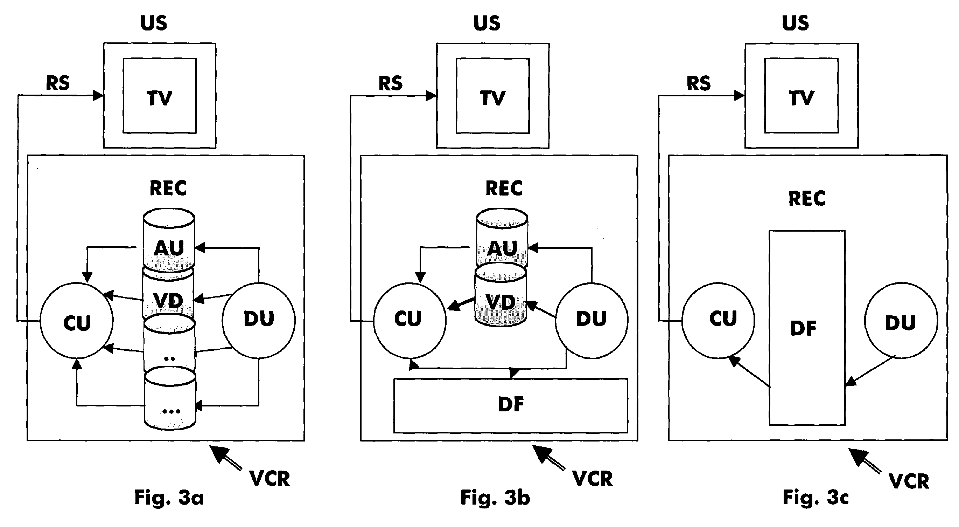

It is also to be noted that the multimedia signal components may be associated to a description file DF of the multimedia signal components broadcasted by the multimedia content provider MCP. As shown at the Figs. 3b and 3c, the description file may be used to select what signal components will be recorded by the multimedia recorder VCR.

In the present multimedia telecommunication system, the user may record different signal components of a TV show such as Audio/Video (A/V), artifacts, meta-data, choreography script, etc ... In most cases the selection of these multimedia signal components occurs through the set-top-box of the user station. As already mentioned above, the user may select to store the recordings locally, e.g. on the set-top-box, or on a remote node. The user may also record some signal components locally and other components in the remote recorder. To replay the recorded program, the user selects the components he/she wants from the earlier recorded multimedia signal components.

How the recording is performed depends on the implementation of the broadcast. Hereafter are mentioned three possible variants by making reference to the Figs. 3a, 3b and 3c.

Fig. 3a shows a classical variant as already mentioned above and wherein the multimedia recorder VCR, local or remote, records all the different components the broadcast is comprised of. As already mentioned above by making reference to Fig. 1, the VCR of Fig. 3a receives the A/V stream, the graphics, text, meta-data, the choreography script, etc ... by the signal decomposer DU, stored these those different components in the storage device REC, and reassemble them by the signal composer CU at replay time itself.

In a variant shown at Fig. 3b, the multimedia recorder VCR records only the A/V stream as audio signals AU and video signals VD, and stores the accompanying description file DF that describes where to find additional components, such as graphics, text, meta-data, the choreography script, etc..., that make up the broadcast. At replay time, this description file DF is used to reassemble the broadcast.

In another variant shown at Fig. 3c, nothing is actually recorded on the multimedia recorder VCR, only the description file DF is stored. At replay time, VCR uses this description file DF to download all the components requested by the user to play the broadcast.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A multimedia telecommunication system comprising a multimedia content provider (MCP) adapted to broadcast a multimedia composition signal (CS) to a user station (US) via a telecommunication service provider (TSP), said user station being provided with a multimedia recorder (VCR) and a user interface set (TV),
***characterized in that*** said multimedia composition signal (CS) comprises a plurality of multimedia signal components (AU, VD, ST, LG),
***in that** said* multimedia content provider (MCP) comprises a first signal composer (CP) adapted to combined said multimedia signal components into said multimedia composition signal (CS),
*and* ***in that*** said multimedia recorder (VCR) comprises:
- a signal decomposer (DU) adapted to receive and to decompose the multimedia composition signal into said multimedia signal components,
- a storage device (REC) adapted to store at least a portion of the multimedia signal components received from said signal decomposer, and
- a second signal composer (CU) adapted to combine at least part of said portions stored in the storage device into a replay signal (RS) transmitted to said user interface set (TV).

2. The multimedia communication system according to claim 1, ***characterized in that*** said multimedia signal components comprise audio signals (AU), video signals (VD), subtitles data (ST), logo data (LG) and/or other multimedia data.

3. The multimedia communication system according to claim 1, ***characterized in that*** said portion of multimedia signal components comprises any combination of audio signals (AU), video signals (VD), subtitles data (ST), logo data (LG) and/or other multimedia data broadcasted by said multimedia content provider (MCP).

4. The multimedia communication system according to claim 1, ***characterized in that*** said user station (US) is able to control said second signal composer (CU) to combine predetermined portions of multimedia signal components (AU, VD, ST, LG) stored in the storage device (VCR) in order to compose said replay signal (RS) transmitted to the user interface set (TV).

5. The multimedia communication system according to claim 1, ***characterized in that*** said portion of multimedia signal components (AU, VD, ST, LG) comprises a description file (DF) of the multimedia data broadcasted by the multimedia content provider (MCP).

6. The multimedia communication system according to claim 1, ***characterized in that*** said multimedia recorder (VCR) is a local recorder (LR) located at the premises of said user station (US).

7. The multimedia communication system according to claim 6, ***characterized in that*** said local recorder (LR) is located in a set-top-box (STB) coupled to said user interface set (TV).

8. The multimedia communication system according to claim 1, ***characterized in that*** said multimedia recorder (VCR) is a remote recorder (RR) located at a remote data server of said multimedia telecommunication system.

9. The multimedia communication system according to the claims 6 and 8, ***characterized in that*** said remote recorder (RR) is connected to a local recorder (LR) located at the premises of said user station (US).
